# EUROPEAN PATENT APPLICATION

(11) **EP 1 009 131 A1**
(43) Date of publication of application: **14.06.2000**
(21) Application number: 98480090.4
(22) Date of filing: 11.12.1998
(51) Int. Cl.: H04L 12/56

(54) **Method and system for optimizing the end to end path selection in very large packet switching networks**

(71) Applicant: INTERNATIONAL BUSINESS MACHINES CORPORATION, Armonk, NY 10504 (US)
(72) Inventor: Brun, Gérard, 06100 Nice (FR); Chobert, Jean-Paul, 06640 St Jeannet (FR); Boudeile, Guy, 06800 Cagnes / Mer (FR); Fichou, Aline, 06480 La Colle sur Loup (FR); Galand, Claude, 06480 La Colle sur Loup (FR)
(74) Representative: Etorre, Yves Nicolas

(57) **Abstract**

The present invention relates to a method and system for optimizing the end to end path selection in very large packet switching networks.The network is divided in a backbone subnetwork and a plurality of access subnetworks. These subnetworks have a certain hierarchy, but direct links between access subnetworks are allowed. To fulfil the path request between nodes not pertaining to the same subnetwork, the path selection is performed in the backbone subnetwork by concatenating the backbone subnetwork topology with the access subnetwork topologies where the source or destination nodes are located. Only the required subset within access subnetwork topologies is transferred and cached into the backbone subnetwork topology. The main advantages are that :
- The path is computed in one step only
- There is no retry because there is no summarization.
- The computation is faster because applied on a subset of the overall topology (the backbone subnetwork plus at most two access subnetworks).

## Description

### Technical field of the invention

The present invention relates to very large a packet switching networks, and more particularly to a method and system for optimizing the end to end path selection in a network comprising a backbone subnetwork connected to one or a plurality of access subnetworks.

### Background art

### HIGH SPEED PACKET SWITCHING NETWORKS

Data transmission is now evolving with a specific focus on applications and by integrating a fundamental shift in the customer traffic profile. Driven by the growth of workstations, the local area networks interconnection, the distributed processing between workstations and super computers, the new applications and the integration of various and often conflicting structures - hierarchical versus peer to peer, wide versus local area networks, voice versus data - the data profile has become more bandwidth consuming, bursting, non-deterministic and requires more connectivity. Based on the above, there is strong requirement for supporting distributed computing applications across high speed networks that can carry local area network communications, voice, video and traffic among channel attached hosts, business, engineering workstations, terminals, and small to intermediate file servers. This vision of a high speed multi-protocol network is the driver for the emergence of fast packet switching networks architectures in which data, voice, and video information is digitally encoded, chopped into small packets and transmitted through a common set of nodes and links. An efficient transport of mixed traffic streams on very high speed lines means for these new network architecture a set of requirements in term of performance and resource consumption which can be summarized as follows:
- a very high throughput and a very short packet processing time,
- a very large flexibility to support a wide range of connectivity options,
- an efficient flow and congestion control.

### Throughput and Processing Time

One of the key requirement of high speed packet switching networks is to reduce the end to end delay in order to satisfy real-time delivery constraints and to achieve the necessary high nodal throughput for the transport of voice and video. Increases in link speeds have not been matched by proportionate increases in the processing speeds of communication nodes and the fundamental challenge for high speed networks is to minimize the processing time and to take full advantage of the high speed/low error rate technologies, most of the transport and control functions provided by the new high bandwidth network architectures are performed on an end to end basis. The flow control and particularly the path selection and bandwidth management processes are managed by the access points of the network which reduces both the awareness and the function of the intermediate nodes.

### Connectivity

In high speed networks, the nodes must provide a total connectivity. This includes attachment of the user's devices, regardless of vendor or protocol, and the ability to have the end user communicated with any other device. The network must support any type of traffic including data, voice, video, fax, graphic or image. Nodes must be able to take advantage of all common carrier facilities and to be adaptable to a plurality of protocols. All needed conversions must be automatic and transparent to the end user.

### Congestion and Flow Control

Communication networks have at their disposal limited resources to ensure an efficient packets transmission. An efficient bandwidth management is essential to take full advantage of a high speed network. While transmission costs per byte continue to drop year after year, transmission costs are likely to continue to represent the major expense of operating future telecommunication networks as the demand for bandwidth increases. Thus considerable efforts have been spent on designing flow and congestion control processes, bandwidth reservation mechanisms, routing algorithms to manage the network bandwidth. An ideal network should be able to transmit an useful traffic directly proportional to the traffic offered to the network and this as far as the maximum transmission capacity is reached. Beyond this limit, the network should operate at its maximum capacity whatever the demand is.

### PATH SELECTION

The role of the path selection process is to determine optimum paths for users across the network each time a connection is requested. This implies the allocation of network resources to users in order to guarantee their quality-of-service requirements while optimizing the overall throughput within the network. This function takes place entirely within the origin node. Various quality-of-service may be specified by the users, some of them in order to satisfy real-time delivery constraints, others related to non real time data traffic transfer ... The origin node computes a path to the destination that is capable of carrying out the new connection and providing the level of service required by the new connection. The path selection algorithm uses data describing the current traffic load in the entire network (nodes and links). Such data are stored in a topology database located in each node of the network. If no suitable path can be found to meet all requirements, the connection is rejected. Once, the origin node has found a suitable path, a set up message is generated which traverses the selected route, updating the resource allocations for each link visited by the set up message.

### NETWORK CONTROL

The flow and congestion control operations generate additional traffic on the network. Ideally only the exact bandwidth needed at any time by a network connection should be dynamically reserved for that connection, and also only the exact bandwidth needed for the network control operations should be reserved for that purpose. However, it is essential for an efficient flow and congestion control to provide at any time enough network resources in terms of bandwidth or performance to the control traffic. The control traffic can be divided into two main families:
- a network signalling control traffic, and
- a network routing control traffic.

### Signalling Control Traffic

The signalling control traffic is used to establish point-to-point and point-to-multipoint network connections across the network. Signalling control messages are generally forwarded towards the different nodes along the path of the connections. The signalling control traffic includes :
- Connection set-up and connection takedown messages,
- Connections bandwidth refresh messages,
- Connections bandwidth adaptation (increase/decrease) messages,
- Directory queries in network (directed to a specific resource), ...

### Routing Control Traffic

The routing control traffic is used for distributing the network topology information between nodes of the network. This information is necessary mainly for the computation of routing paths between nodes in the network. Routing control messages are generally broadcast to all nodes by means of a spanning tree or flooding mechanisms. The routing control traffic includes :
- Control Point Spanning Tree maintenance messages,
- Topology update messages
- Directory searches in network (broadcast through the network). ...

### LARGE NETWORKS

### Path Selection

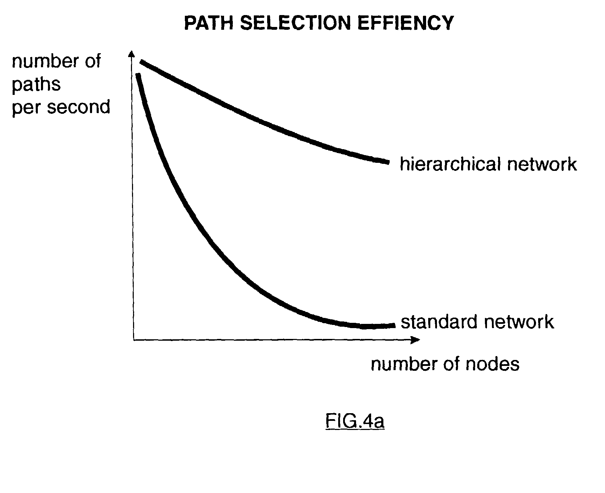

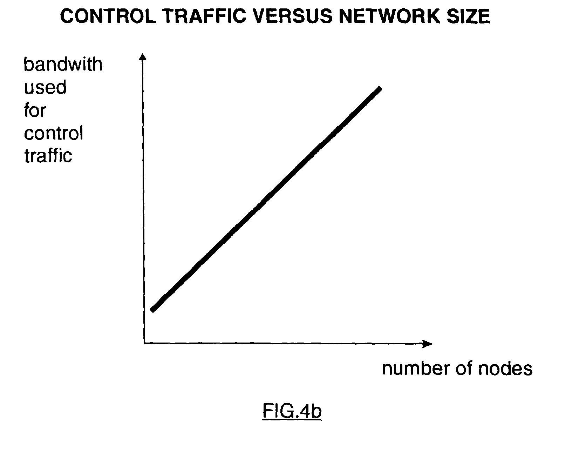

Figure 4a shows the relationship between the number of nodes in a packet switching network and the time required to select a path from a source to a destination node. Selecting a path and setting up a connection can take considerable processing overhead in network nodes and can generate a significant delay. For end nodes supporting multiple connections set-up requests simultaneously, it is easy to have some sort of scheduling to avoid bottlenecks in the connection set up process. But, nevertheless, the time for establishing a connection may be huge. For permanent connections the set up delay probably does not have very much meaning. However, for real time connections, this is a very important parameter, especially since some connections terminate in equipment that runs time-outs. This delay is also important from the point of view of path switching on failure or preemption. The rerouting of a lot of connections that were using a failing link or node may lead to a high number of simultaneous new path set up. The establishment in parallel of multiple new connections through alternate routes take time and usually disrupt the connections at the end user level. In large high speed packet switching networks, the support of a high number of connections set up operations implies some requirements in term of performance and resource consumption which can be summarized as follows :
- the origin node - or the node providing the route calculation for the origin node - must be able to decide where to route an incoming packet with a guaranteed quality-of-service (delay, loss probability, ...) in a very short portion of time. The computation must be rapid enough to select an optimum path for each connection request.
- In case of node or link failure, the origin node - or the node providing the route calculation for the origin node - must be able to establish alternative connections without disrupting the traffic at end user level.
- The processing time in nodes must be minimized.
- The network resources along the selected path and within the entire network must be optimized.

### Control Traffic

As shown in Figure 4a, large networks suffer from the large amount of control traffic necessary to update the distributed network topologies in view of the high number of nodes and transmission links. The problem is particularly sensible on spanning tree links and on links issued from access nodes. Because of the high importance of network traffic, enough bandwidth on the links must be reserved to transmit the routing and signalling control messages. Insufficient resources for routing control messages could lead to invalid topology tables and a node, with an erroneous or obsolete view of the network topology, may take wrong routing decisions. Insufficient resources for the signalling control messages could also lead to errors or at least to a degradation of the quality of service in the establishment and management of network connections For optimizing the more critical resources which they are the more demanded, in particular the computer resources in source nodes and the bandwidth on the spanning tree and on links connecting access nodes, several solutions can be considered as it will be discussed in the following section.

### HIERARCHICAL NETWORKS

Most of the wide networks (large country, world-wide networks) are configured so that a backbone network can support the communications between different access networks. Such network topology allows good performances and the optimisation of the network administration. Generally, access networks are private networks and indeed they are very often confined to a local area such as a building or a campus. However, a private network can be distributed over a wide area by the use of carrier links between nodes. The backbone network is generally a public network but can also be part of a private network using lines leased from a carrier such as the PTT.

Hierarchical networks have been proposed for a while, and such architectures are currently developed for example with PNNI (Private Network to Network Interface) for ATM (Asynchronous Transfer Mode) or NBBS (Networking BroadBand Services) for IBM (International Business Machine) networks.

### Private Network to Network Interface

The Private Network to Network Interface (PNNI) is described in in the ATM Forum specifications (PNNI 1.0 Specs March 1996), however a summary can be found in publication entitled "Asynchronous Transfer Mode Networks - Performance Issues", second edition Artech House 1995 (Raif O. Onvural) incorporated herewith by reference, PNNI is the demarcation point between two switching systems. In this context, a switching system may be :
- a single ATM switch. A PNNI is used between every pair of neighbour switches in the network. These switches may be built by different vendors. ATM end stations are attached to the network across UNIs (User to Network Interface).
- alternatively, a collection of two or more ATM switches managed and operated under one administration. The network may be built with switches from a single vendor. This would eliminate the disadvantages of operating at the level provided by the PNNI and allow it to take advantage of vendor specific network services and solutions toward utilizing network resources efficiently.

In the former case, the PNNI becomes a switch to switch interface, whereas in the later case, it is referred to as an network to network interface (NNI). PNNI includes the definitions of various physical interfaces, ATM layer, management interface, and signalling. The ATM Forum PNNI specifications includes both routing and signalling functions :
- PNNI routing comprises various "generic" network control functions, such as call admission, path selection, and topology distribution.
- PNNI signalling is used to carry PNNI routing related protocol information as well as perform call control functions for connection establishment, management and termination.

In PNNI routing, the switching system that a connection request originates from its UNI is responsible for finding the end to end path to the destination end station. This is referred to as "source routing". For each connection request, the source switching finds a path based on the advertised capabilities and the desirability of other switching systems to carry connections with different characteristics. After finding the path, the originating switching system uses PNNI signalling to request connection establishment from intermediate switching systems along the path. PNNI routing is based on link state routing. Each switching system advertises a set of parameters including information about the links attached to it, quality of service parameters it can guarantee, and its capability and desirability to carry particular types of connections. Assuming that each switching system sends a message advertising the status of resources it controls as soon as a change takes place (i.e., upon accepting or terminating a connection). This message will arrive at other switching systems (at the minimum) after the corresponding propagation delays. Accordingly, source switching can never have up to date information about the status of other switching systems. Increasing the frequency and the amount of information advertised may be thought to enable "better" paths to be chosen. Doing so would also result in significant cost in bandwidth and processing complexity. At the other extreme, if no information is advertised then the chances of choosing "poor" paths would increase. The topology update mechanism in ATM networks needs to be designed with care. Otherwise, the cost of bandwidth and the processing complexity may not be justified when compared with the amount of network efficiency achieved. The choice of what internal state information to advertise, how often, and to where require the specification of a multilevel hierarchical routing model. The PNNI hierarchical model is recursive and at each level of hierarchy, the topology is represented by logical nodes and logical links. At the lowest level of hierarchy, each node represents a real switching system or a group of switching system. At higher layers, each node may represent either a real system or a group of switching systems. Similarly, PNNI links may correspond to either a real physical link or a virtual link.

Nodes are collected into peer groups. All the nodes within a peer group exchange link information and obtain an identical topology database representing the peer group. Peers groups are organized into a hierarchy in which one or more peer groups are associated with a parent peer group. Parent peer groups are grouped into higher layer peer groups.
The operation of PNNI routing in a parent group attempts to collapse a child peer group into a single node. In this case, there would be different paths to cross a peer group, each with different characteristics. Hence, it is not always possible to advertise the true cost of the real physical paths. The representation of peer groups and their interconnections as logical nodes and logical links implies that information distributed at higher layers is summarized. This allows the routing to scale to very large networks. Its consequence is that somewhat imperfect paths may be selected.

The PNNI routing uses the concept of abstraction. Nodes and links not pertaining to the local peer group do not appear as such but are factored in a topology summary :
- The summarized topology is built of a much smaller number of nodes and links. While the amount of control traffic is proportional to the topology size, the corresponding control traffic for distributing the topology is reduced accordingly. The drawback is the complexity introduced by the hierarchy.
- The path selection is computed on the compounded local peer group and the rest of the network viewed as a summary. The real path is expanded stepwise from peer group to peer group towards the destination. The drawback is, first, a stepwise path selection which does lead to an optimal path. Secondly, there is a potential risk of retry (cranckback) inherent to the summarization.

### Decomposition of Network Topology

In the real world , large transport networks are not fully meshed. Networks are usually built around a hierarchical structure. A set of nodes interconnected by high throughput links are used to build a "backbone" with a high degree of meshing to allow the redundancy and reliability required by the user. Then local nodes are grouped in geographical "subnetworks" themselves attached to the backbone. The control traffic can take advantage of the particular network topology to drastically reduce the network load. For a given connection, only a limited number of nodes are defined as eligible and are taken in account by the routing algorithm in the optimal route search.

US patent 5,495,479 (EP application number 93480105.1, IBM's reference FR 9 93 013 entitled "Method and Apparatus for an Automatic Decomposition of a Network Topology into a Backbone and Subareas" (C. Galand et al.) discloses a method and system for performing an automatic decomposition of a network into a backbone and subareas to speed up the path selection process without degrading the optimization criterion of the routing algorithm and without generating additional control messages on the network. The selection of a routing path in an access node involves the steps of storing the network configuration; automatically pre-selecting a set of usable links for each destination node located in the network; storing locally said pre-selection of usable links; determining, for each connection request between said access node and a destination node, a routing path among said pre-selected usable links.

US patent 5,91,690 (EP application number 93480105.1, IBM's reference FR 9 93 014 entitled "Method and Apparatus to Speed up the Path Selection in a Packet Switching Network" (JP Alfonsi et al.) discloses a method and system for selecting a routing path from an access node to a destination node in a packet communication network comprising backbone and local links. Thanks to data stored in a network topology database, each link in the network is identified as either a backbone link or a local link. All backbone links, all links attached to the network access node and to the destination node are selected as usable. The optimal routing path between access node and destination node is determined using only the identified selected links.

### PROBLEM

Most packet switching networks built of a very large number of nodes interconnected with links, are facing the following problems :
- The multiple step computation of a path requires a huge amount of computer resources to explore every link of the network.
- The computed path is not optimal.
- The distribution and update of the network topology requires a large number of control messages which tend to congest the network.

### Summary of the Invention

The present invention relates to a method and system for optimizing the end to end path selection in very large packet switching networks. The network is divided in a backbone subnetwork and a plurality of access subnetworks. These subnetworks have a certain hierarchy, but direct links between access subnetworks are allowed. To fulfil the path request between nodes not pertaining to the same subnetwork, the path selection is performed in the backbone subnetwork by concatenating the backbone subnetwork topology with the access subnetwork topologies where the source or destination nodes are located. Only the required subset within access subnetwork topologies is transferred and cached into the backbone subnetwork topology. The main advantages are that :
- The path is computed in one step only
- There is no retry because there is no summarization.
- The computation is faster because applied on a subset of the overall topology (the backbone subnetwork plus at most two access subnetworks).

The access subnetworks comprise one or a plurality of access border nodes directly connected to the backbone subnetwork. The backbone subnetwork comprises one or a plurality of backbone border nodes directly connected to the access subnetworks. Border nodes of different subnetworks are connected by border links. Each node has access to a local topology of the subnetwork it belongs to. If the source node and the destination node are located in different access subnetworks, the source node :
- checks whether the destination node is located in the source subnetwork or not and whether the source is located in the backbone subnetwork or not. If the destination node is not located in the source subnetwork and if the source is not located in the backbone network, the source node :
   - selects a backbone border node adjacent to the source subnetwork;
   - requests the backbone border node to select a path from the source node to the destination node.

The backbone border node adjacent to the source subnetwork :
- receives the request for selecting a path from the source node to the destination node;
- requests an access border node in the source subnetwork to send it back a subset of the local topology of the source network;
- receives this subset of the local topology of the source network;
- checks whether the destination node is located in the backbone subnetwork or not. If the destination node is not located in the backbone subnetwork, the backbone border node :
   - identifies the destination subnetwork;
   - selects an access border node in the destination subnetwork;
   - requests said access border node in the destination subnetwork to send it back a subset of the local topology of the destination subnetwork;
   - receives said subset of the local topology of the destination network;
   - selects a path from the source node to the destination node from the information contained in the local topology of the source subnetwork, the backbone subnetwork and destination subnetwork.
   - sends back to the source node the selected path.

### Drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure 1 describes the connection set-up process in a packet switching network.
- Figure 2 shows a typical speed packet switching network.
- Figure 3 describes a high speed routing point.
- Figure 4a shows the relationship between the number of nodes in a packet switching network and the time required to select a path from a source to a destination node.
- Figure 4b shows the bandwidth used by the control traffic in function of the number of nodes within the network.
- Figure 5 describes the Topology DataBase structure.
- Figure 6 shows the distribution of the topology in a network comprising a backbone subnetwork connected to a plurality of access subnetworks according to the present invention.
- Figure 7 shows the path selection flow according to the present invention.
- Figure 8 is a flow chart of the path selection in a source node according to the present invention.
- Figure 9 is a flow chart of the path selection in a backbone border node according to the present invention.

### Preferred embodiment of the invention

### I PRIOR ART

### HIGH SPEED COMMUNICATIONS

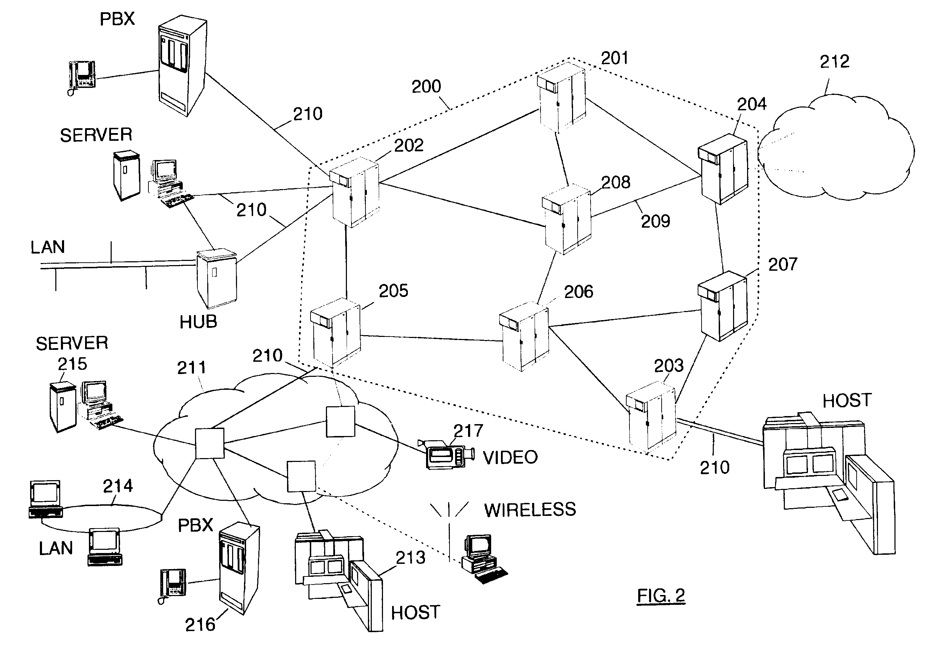

As illustrated in Figure 2, a typical model of communication system is made of several user networks (212) communicating through a high performance network (200) using private lines, carrier provided services, or public data networks. Each user network can be described as a set of communication processors and links (211) interconnecting large computers used as enterprise servers (213), user groups using workstations or personal computers attached on LAN (Local Area Networks 214), applications servers (215), PBX (Private Branch eXchange 216) or video servers (217). These user networks, spread in different establishments, need to be interconnected through wide area transport facilities and different approaches can be used for organizing the data transfer. Some architectures involve the checking for data integrity at each network node, thus slowing down the transmission. Others are essentially looking for a high speed data transfer. To that end the transmission, routing and switching techniques within the nodes are optimized to process the flowing packets toward their final destination at the highest possible rate. The present invention belongs essentially to the latter category and more particularly to the fast packet switching network architecture detailed in the following paragraphs.

### High Performance Packet Switching Networks

The general view in Figure 2 shows a fast packet switching transmission system comprising eight nodes (201 to 208) each node being interconnected by means of high speed communication lines called Trunks (209). The access (210) to the high speed network by the users is realized through Access Nodes (202 to 205) located at the periphery. These Access Nodes comprise one or more Ports, each one providing an access point for attaching external devices supporting standard interfaces to the network and performing the conversions required to transport the users data flow across the network from and to other external devices. As example, the Access Node (202) interfaces respectively a Private Branch eXchange (PBX), an application server and a hub through three Ports and communicates through the network by means of the adjacent Transit Nodes (201), (205) and (208).

### Switching Nodes

Each network node (201 to 208) includes a Routing Point where the incoming data packets are selectively routed on the outgoing Trunks towards the neighbouring Transit Nodes. Such routing decisions are made according to the information contained in the header of the data packets. In addition to the basic packet routing function, the network nodes provide ancillary services such as:
- the determination of routing paths for packets originated in the node,
- directory services like retrieving and updating information about network users and resources,
- the maintaining of a consistent view of the physical network topology, including link utilization information, and
- the reservation of resources at access points of the network.

These ancillary services include:
- the storage within the node of alternate paths,
- the updating of these paths.

Each Port is connected to a plurality of user processing equipment, each user equipment comprising either a source of digital data to be transmitted to another user system, or a data sink for consuming digital data received from another user system, or, typically, both. The interpretation of the users protocols, the translation of the users data into packets formatted appropriately for their transmission on the packet network (200) and the generation of a header to route these packets are executed by an Access Agent running in the Port. This header is made of Control, Routing and Redundancy Check Fields.
- The Routing Fields contain all the information necessary to route the packet through the network (200) to the destination node to which it is addressed. These fields can take several formats depending on the routing mode specified (connection oriented or connectionless routing mode...).
- The Control Fields include, among other things, an encoded identification of the protocol to be used for interpreting the Routing Fields.
- The Redundancy Check Fields are used to check for errors in the header itself. If an error is detected, the packet is discarded.

### Routing Points

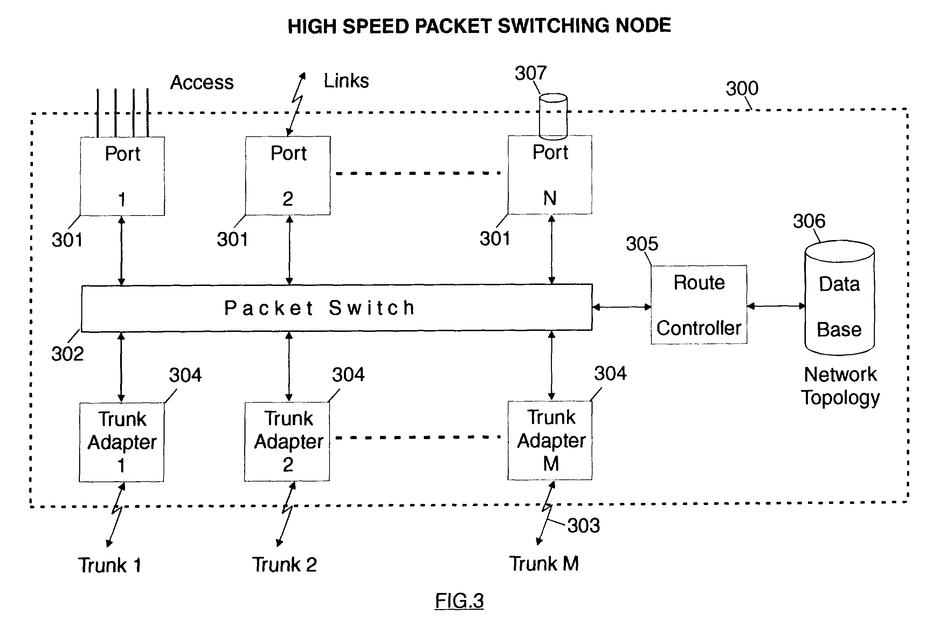

Figure 3 shows a general block diagram of a typical Routing Point (300) such as it can be found in the network nodes (201 to 208) illustrated in Figure 2. A Routing Point comprises a high speed packet Switch (302) onto which packets arriving at the Routing Point are entered. Such packets are received:
- from other nodes over high speed transmission links (303) via Trunk Adapters (304).
- from users via application adapters called Ports (301).

Using information in the packet header, the adapters (304, 301) determine which packets are to be routed by means of the Switch (302) towards a local user network (307) or towards a transmission link (303) leaving the node. The adapters (301 and 304) include queuing circuits for queuing packets prior to or subsequent to their launch on the Switch (302).

The Route Controller (305) calculates the optimum paths through the network (200) so as to satisfy a given set of quality-of-services specified by the user and to minimize the amount of network resources used to complete the communication path. Then, it builds the header of the packets generated in the Routing Point. The optimization criterion includes the number of intermediates nodes, the characteristics of the connection request, the capabilities and the utilisation of the links (Trunks) in the path, the number of intermediate nodes... The optimum route is stored in a Routing Database (308) for further reuse.

All the information necessary for the routing, about the nodes and transmission links connected to the nodes, are contained in a Network Topology Database (306). Under steady state condition, every Routing Point has the same view of the network. The network topology information is updated when new links are activated, new nodes added to the network, when links or nodes are dropped or when link loads change significantly. Such information is exchanged by means of control messages with all other Route Controllers to provide the up-to-date topological information needed for path selection (such database updates are carried on packets very similar to the data packets exchanged between end users of the network). The fact that the network topology is kept current in every node through continuous updates allows dynamic network reconfigurations without disrupting end users logical connections (sessions).

The incoming transmission links to the packet Routing Point may comprise links from external devices in the local user networks (210) or links (Trunks) from adjacent network nodes (209). In any case, the Routing Point operates in the same manner to receive each data packet and forward it on to another Routing Point is dictated by the information in the packet header. The fast packet switching network operates to enable a communication between any two end user applications without dedicating any transmission or node facilities to that communication path except for the duration of a single packet. In this way, the utilisation of the communication facilities of the packet network is optimized to carry significantly more traffic than would be possible with dedicated transmission links for each communication path.

### NETWORK MANAGEMENT

### Network Control Functions

The Network Control Functions are those that control, allocate, and manage the resources of the physical network. Each Routing Point has a set of the foregoing functions in the Route Controller (305) and uses it to facilitate the establishment and the maintenance of the connections between users applications. The Network Control Functions include in particular:
- **Directory Services**
   - for retrieving and maintaining information about network users and resources.
- **Bandwidth Management**
   - for processing the bandwidth reservation and maintenance messages, and
   - for monitoring the current reservation levels on links.
- **Path Selection**
   - for choosing the best path for each new connection considering the connection requirements and the current link utilisation levels.
- **Control Spanning Tree**
   - for establishing and maintaining a routing tree among the network nodes,
   - for using it to distribute control information (in parallel) including link utilisation, and
   - for updating the Topology Database of the nodes with new network configurations or link/node failures.
- **Topology Update**
   - for distributing and maintaining, using the Spanning Tree, information about the logical and physical network (including link utilization information) in every node.
- **Congestion Control**
   - for enforcing the bandwidth reservation agreements between the network's users and the network which are established at the call set up time, and
   - for estimating actual bandwidth and for adjusting reservation if necessary during the life of the connection.

### Topology Database (TDB)

The Topology Database contains information about nodes, links, their properties, and the bandwidth allocation. The topology information is replicated in each node of the network. An algorithm guarantees the correctness of each node's Topology Database when links and nodes are added or deleted or when their characteristics change. The database comprises:
- the physical topology of the network which includes static information like physical characteristics of nodes and links,
- the state of nodes and links, and
- the link utilisation which includes dynamic characteristics like current bandwidth (used and reserved), real-time measurements...

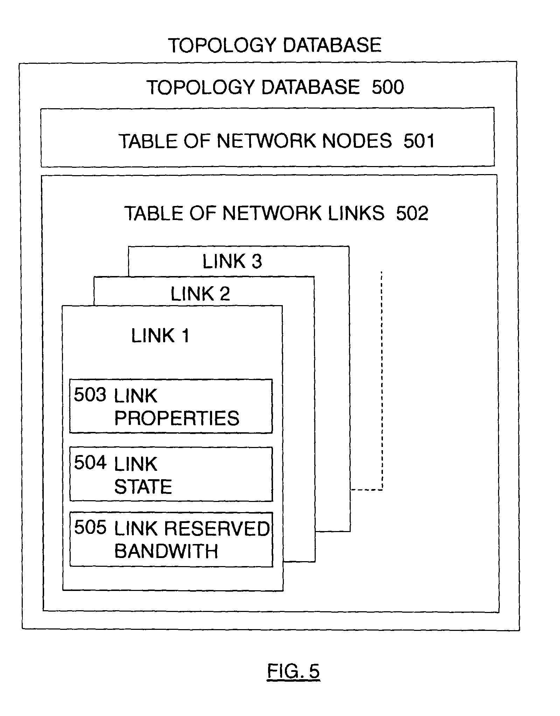

The general organisation of the Topology Database is shown in Figure 5. To each resource in the network, nodes (501) or links (502), is associated an entry in the database. In particular, each link entry includes the following characteristics:
- (503) **the link physical properties** :
   - transmission medium and speed,
   - routing mode supported,
   - maximum packet size,
   - link buffer capacity,
   - propagation delay,
   - bandwidth reservation supported...
- (504) **the link state :**
   - on-line (link can accept user connections),
   - quiescent (link cannot accept additional user
   - connections, but existing connections continue),
   - off-line (link cannot accept user connections and existing connections are cancelled)...
- (505) **the link utilization :**
   - real-time measurements,
   - reserved bandwidth,...

### Bandwidth Management

Users are requiring different quality-of-services. In order to provide the various service levels, different types of network connections are established. A connection is defined as a path in the network between the origin access node and the destination access node representing respectively the source user and the target user. Networks connections can be classified as reserved or non-reserved. Reserved network connections require bandwidth to be allocated in advance along the chosen path. Most of the high speed connections are established on a reserved path to guarantee the quality of service and the bandwidth requested by the user. This path across the network is computed by the origin node using information in its Topology Database including current link utilization. The origin node then sends a reservation request along the chosen path, and intermediate nodes (if allowing the reservation) then add this additionally reserved capacity to their total. These changes are reflected in topology broadcast updates sent by the intermediate nodes. Intermediate nodes need not to have an awareness of the status of each connection on their adjacent links. If an intermediate node does get too many packets, generally because of unanticipated burstiness, it simply discards them (the user can select a service that will recover from such discards).
Depending on the node type, the function of the Bandwidth Management is :
- in the origin node,
   - to identify the best possible route according to the network status and the connection parameters including the connection priority,
   - to reserve at connection set-up, the bandwidth required by the network connections and to maintain this bandwidth for the duration of the connection.
   - to reject the connection if resources needed to satisfy the request are not available in the network.
- in a transit node,
   - to administer the bandwidth reservations on the links, and
   - according to the present invention to administer the bandwidth reservations on the links of the alternate paths.

### Bandwidth Reservation

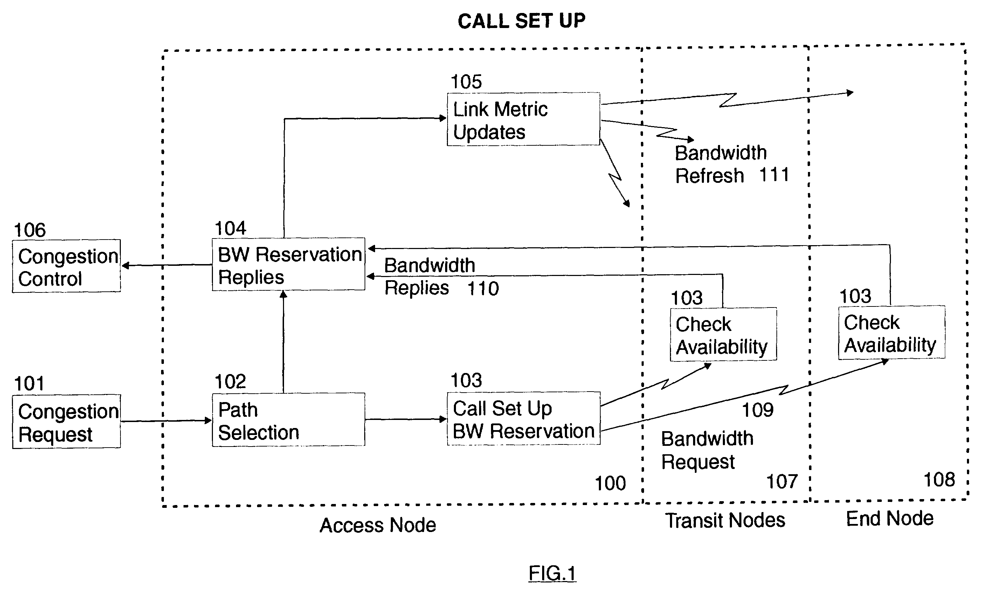

The connection set up and bandwidth reservation process, as shown in Figure 1, comprises the following steps :
- (101) a **Connection Request** is specified by the user via a set of parameters including origin and destination network address, and data flow characteristics (bit rate, burstiness).
- (102) a **Path Selection** process determines a path and a set of connection requests, one for each link of the path, using parameters provided by the Topology Database.
- (103) a **Bandwidth Reservation** process uses the connection requests to reserve bandwidth on each of the links of the path. This process involves exchange of information (109) between the origin (access) node (100), the transit nodes (107) on the path, and the destination node (108).
- (104) **Bandwidth Reservation** replies from transit nodes and end node generate either a call acceptance or a call reject (110).
- (105) a **Link Metric Update** process updates, in case of call acceptance, the modified link metrics. This information (111) is sent through the Control Spanning Tree to the Topology Database of each node in the network by means of a broadcast algorithm.
- (106) a **Congestion Control** Set Up adjusts, if the call is accepted, the network connection characteristics.

The bandwidth reservation process is performed in the origin and destination nodes by Connection Agents (CA) and by Transit Connection Managers (TCMs) in the transit nodes along the chosen path.

### Path Selection

The purpose of the Path Selection process is to determine the best way to allocate network resources to connections both to guarantee that user quality of service requirements are satisfied and also to optimize the overall throughput of the network. The Path Selection process must supply to the requesting user a path over the network over which a point-to-point connection will be established, and some bandwidth will be reserved if needed. The Path Selection algorithm uses as input parameters in one hand the user requirements and on the other hand the status of the network links and nodes as maintained in the Topology Database. The Path Selection process takes place entirely within the node wherein the connection is requested. It makes use of the Topology Database and selects the "best path" based on each of the following criteria in order of importance :
- **Quality-of-Service :**
   The connection's quality-of-service requirements are to be satisfied throughout the life of the connection. There are a large number of variables that determine the performance of a network. However, the quality-of-service can be defined as the set of measurable quantities that describe the user's perception of the service offered by the network. Some of the quality-of-service parameters are listed below :
   - connection set up delay,
   - connection blocking probability,
   - loss probability,
   - error probability,
   - end-to-end transit delay,
   - end-to-end delay variation,
   Some of these quantities have an effect upon how paths are computed, for example the packet loss probability or the end-to -end transit delay : the sum of propagation delays along a computed path may not violate the end-to-end transit delay specifications.
- **Minimum Hop :**
   The path shall consist of as few links as feasible to support the connection's quality of service requirements, thus minimizing the amount of network resources as well as processing costs to support the connection. The path computation is based on the links utilization at the time the connection is requested.
- **Load Balancing :**
   Among a minimum hop path, a path with "lightly loaded" links is preferred over a path with "more heavily loaded" links based on the network conditions at the time of path selection. The load of a link depend of the customer criteria : it can be an increasing function of the total reserved bandwidth of the link, proportional to the amount of traffic actually measured on the link, ... When the path load (sum of the load of the links over the selected path) is the preponderant criterion of selection, the path of lesser load is chosen.

Satisfying the first requirement is the key factor in path selection and the other two functions are used to optimize traffic through the network.

### II PRESENT INVENTION

### NETWORK STRUCTURE

The network according to the present invention, is partitioned into two types of subnetworks. The topology distribution is effective at the subnetwork level only.
- Access subnetworks have a limited number of nodes and links. These nodes are basically used for accessing the network as source nodes or destination nodes.
- The backbone subnetwork is unique and generally comprises a higher number of nodes and links than access subnetworks. The backbone subnetwork is mostly used for transmitting traffic from an access subnetwork to another although this is not a restriction.

Consequently, nodes are not functionally specialized even if they belong to different types of subnetwork. Access subnetworks may have direct links in between but an access subnetwork should not be used for transmitting traffic from an access node to another. An access subnetwork and the backbone subnetwork may be connected by several links.
- A node that belongs to an access subnetwork and that is directly connected to the backbone subnetwork is called "access border node".
- A node that belongs to the backbone subnetwork and that is directly connected to an access subnetwork is called "backbone border node".
- A link between border nodes of different subnetworks is called "border link".

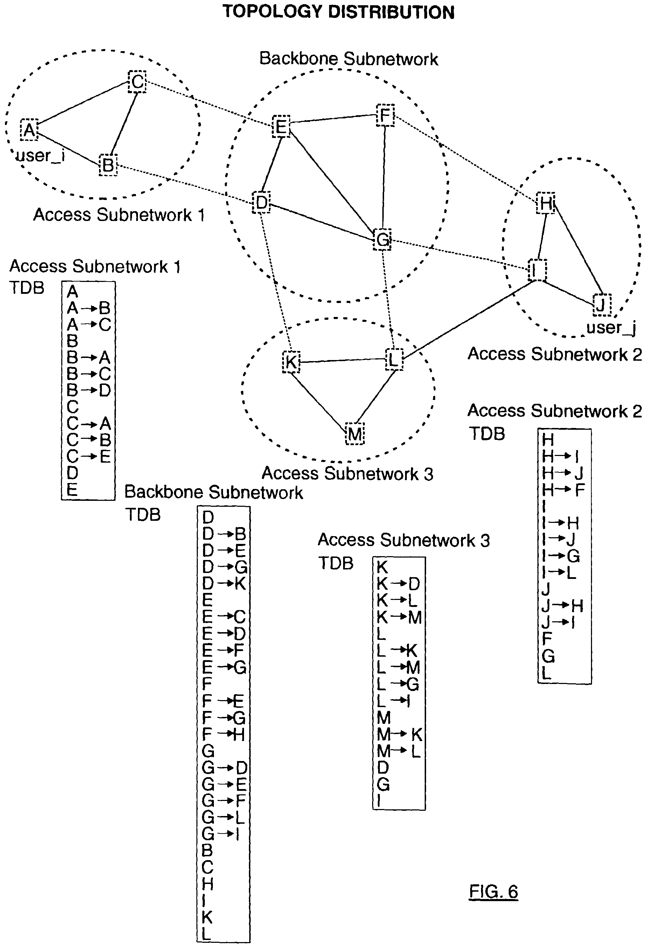

Figure 6 shows a typical network comprising a backbone subnetwork interconnected to a plurality of access subnetworks (access subnetworks 1, 2, 3) :
- Nodes A, B, C .. M are interconnected with transmission links.
- The backbone subnetwork comprises nodes D, E, F, G.
- Access subnetwork 1 is built of nodes A, B, C.
   Access subnetwork 2 is built of nodes I, J, H.
   Access subnetwork 3 is built of nodes K, L, M.
- Nodes B, C, K, L, H, I are access border nodes.
   Nodes D, E, F, G are backbone border nodes.
- Links C-E, B-D, K-D, L-G, I-G, H-F, L-I are border links.

A node is identified by means of a subnetwork identifier and a node identifier, this node identifier is unique within the subnetwork the node belongs to. A specific identifier is used to identify the backbone subnetwork.
In each subnetwork (access or backbone) the associated topology content is shown in a TDB pattern.

### TOPOLOGY DATABASE (TDB)

Each node within a same subnetwork has the same view of the subnetwork topology. The information contained in the Topology DataBase (TDB) is limited to the subnetwork level and to adjacent border nodes : there is no systematic replication between subnetworks. As described previously, entries in the Topology DataBase are of two types : node or link. There is one node entry for each subnetwork node (nodes A, B, C) and each adjacent border node (nodes E, D). There is one link entry for each unidirectional link. Each unidirectional link being attached to its origin node, the subnetwork Topology DataBase (TDB) contains all the unidirectional links attached to the subnetwork nodes. This includes the unidirectional border links of the subnetwork border nodes (C ->E, B->D).
As shown in Figure 6, the different Topology DataBases (TDB) are exclusive. However, they partially share each other the knowledge of the backbone subnetwork or the knowledge of the adjacent access subnetworks (adjacent border nodes and border links). For instance, the Topology DataBase of access subnetwork 1 comprises all the nodes (A, B, C) located within this subnetwork, the corresponding outgoing unidirectional links (A -> B, A -> C, B -> A, B -> C, B -> D, C ->A, C - B, C -> E) and the backbone border nodes (D, E). Unidirectional border links (B -> D, C -> E) of access border nodes (B, C) are included.

### PATH SELECTION

In a network with a distributed Topology DataBase, the path selection takes benefit of all the network information available locally at the source node. In the hierarchical network model defined here above, the selection of a path locally is still possible at the condition that the destination node and the source node belong to the same subnetwork (access subnetwork or backbone subnetwork). On the contrary, the selection of a path between two nodes belonging to two different subnetworks cannot generally be resolved locally. For selecting an optimal path locally in a single computation, it is necessary to collect into a single Topology DataBase the required information concerning source and destination subnetworks in addition to the backbone subnetwork. According to the present invention (and except when both source and destination subnetworks are adjacent), a path selection request is sent to one of the backbone border nodes and this node is in charge of processing the path selection algorithm. Border nodes in the backbone subnetwork are good candidates because :
- they already have the full backbone subnetwork topology;
- they are close to the source node which minimizes the time required for transmitting the path selection request.
- they have the highest likelihood of having a recent path selected in their cache.

The backbone border node requests to access border nodes located in the access subnetworks of the source and destination nodes, the topology subset corresponding to the quality-of-service (QOS) of the path selection request.

*Note :* a cache can be used by the backbone border node for the subnetwork topology subset. If the information is recent enough the cache is used by the backbone border node directly. If the information is not recent enough, a request for updating the topology subset is sent to the access border nodes located in the subnetworks of the source and destination nodes. The path selection is performed in the backbone border node and the result sent back to the source node. This process is very efficient for handling bursts of path selection requests involving the same two subnetworks.

### Path Selection : Cache

The only case where it is possible to determine a path between two nodes located in two different subnetworks, is when a cache comprising already computed paths is implemented in the source node.

A cache mechanism for the selection of a path is described in US patent application no 834679 (EP application number 97480020.3, IBM reference FR 9 94 038) entitled "Method and system for minimizing the connection set-up time in high speed packet switching networks". As many of connections originated from a network node flow to the same destination node, it is possible to take a serious benefit in reusing the same already calculated paths for several connections towards the same node. The path calculated at the time the connection is requested is recorded in a routing database (cache) and updated each time a modification occurs in the network. Alternate paths for supporting non-disruptive path switch on failure or preemption, and new paths towards potential destination nodes are calculated and stored when the connection set up process is idle. These last operations are executed in background with a low processing priority and in absence of connection request.

The possibility to use a cache must be considered as a particular embodiment of the invention and does not need to be viewed as a required part of it. Therefore all reference to a path computation will not implicitly recall the cache search. The existence of the cache, from now on, is omitted on purpose to simplify the flow charts.

### Path Selection : General flow

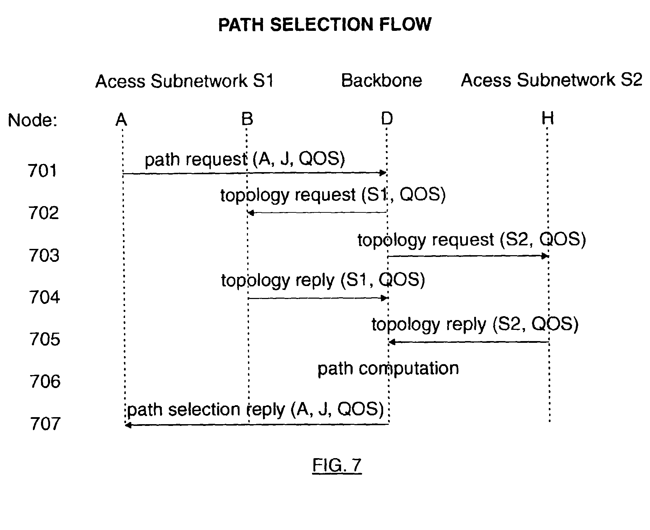

Figure 7 shows the path selection flow according to the present invention :
- **701.** A request for establishing a connection between nodes A and J, is received in access node A. Since access nodes A and J do not belong to the same subnetwork (source node A is in access subnetwork 1 and destination node J is in access subnetwork 2) and since node A is not in the backbone subnetwork, node A searches a backbone border node thank to its local Topology Database. Node D is selected as backbone border node and node A sends it a path selection request. This path selection request comprises among other information :
   - a source node identification,
   - a destination node identification,
   - the quality-of-service (QOS) required,
   - etc ...
- **702.** The backbone border Node D which does not have a recent topology subset corresponding to the quality-of-service (QOS) requirements of access subnetwork 1, requests this topology subset to its closest access border node (node B) in access subnetwork 1.
- **703.** Similarly, the backbone border node D requests the corresponding topology of its closest access border node (node H) in access subnetwork 2.
- **704.** Node D receives from the access border node B, the topology subset corresponding to access subnetwork 1.
- **705.** Node D receives from the access border node H, the topology subset corresponding to access subnetwork 2.
- **706.** Node D computes the path (from source node A to destination J) from the compounded information contained in the topology of the backbone subnetwork and in the two topology subsets of access subnetworks 1 and 2.
- **707.** Node D sends back a path selection reply to source node A with the path newly selected.

### Path Selection : Simplified flow

The flow is somewhat simplified in some specific situations already mentioned above:
- 1. The subnetwork 1 is the backbone subnetwork. The path selection request and the path selection reply are handled locally in the source node. The source topology is the backbone subnetwork itself. The previous steps 701, 702, 704, 707 do not take place.
- 2. The subnetwork 2 is the backbone subnetwork. The destination topology is the backbone subnetwork itself. The steps 703, 705 do not take place.
- 3. There is a single subnetwork involved into the path selection. Only a local path is selected.
- 4. A cache for the topology subset of subnetwork 1 exists and is recent. The steps 702, 704 do not take place.
- 5. A cache for the topology subset of subnetwork 2 exists and is recent. The steps 703, 705 do not take place.

### Path Selection Algorithm in Access Subnetwork Node

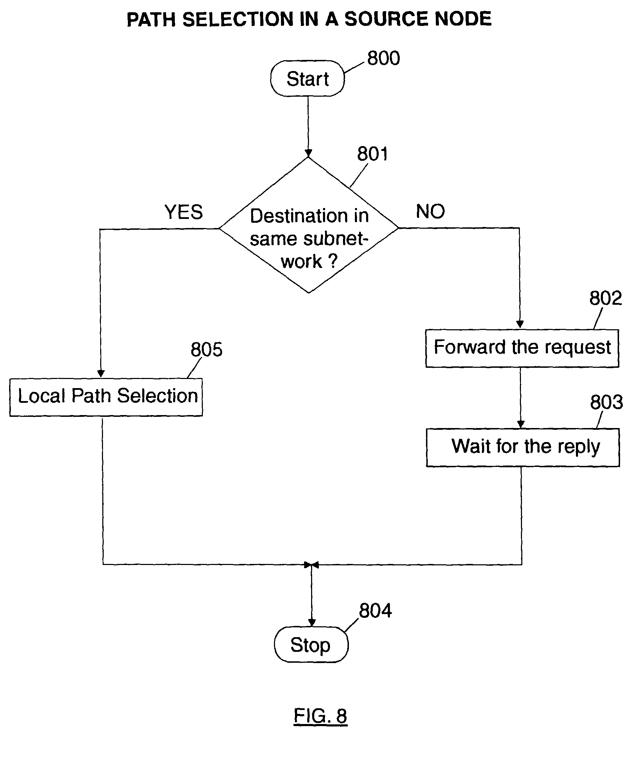

Figure 8 is the flow chart of the path selection in a source node according to the present invention. For clarity purpose, only the normal case is represented (the time out behaviour is omitted). This procedure is called when a connection request is received in an access subnetwork node and a path to a destination node must be selected :
- **800.** start of the path selection process.
- **801.** a test determines whether or not the destination node is located in the same access subnetwork as the source node :
   - If both source and destination nodes are in the same access subnetwork, the procedure goes on with step (805).
   - If source and destination nodes are not in the same access subnetwork, the procedure goes on with step (802).
- **802.** A path selection request is sent to a backbone border node. Refer to the following section "Path Selection Algorithm in Backbone Subnetwork Node" for the description of the procedure run in the backbone border node.
- **803.** The reply from the backbone node is awaited. When the reply is received, the procedure is complete and terminates on step (804).
- **805.** The computation is done locally since the topology is up-to-date. Then, the procedure is complete and terminates on step (804).

### Path Selection Algorithm in Backbone Subnetwork Node

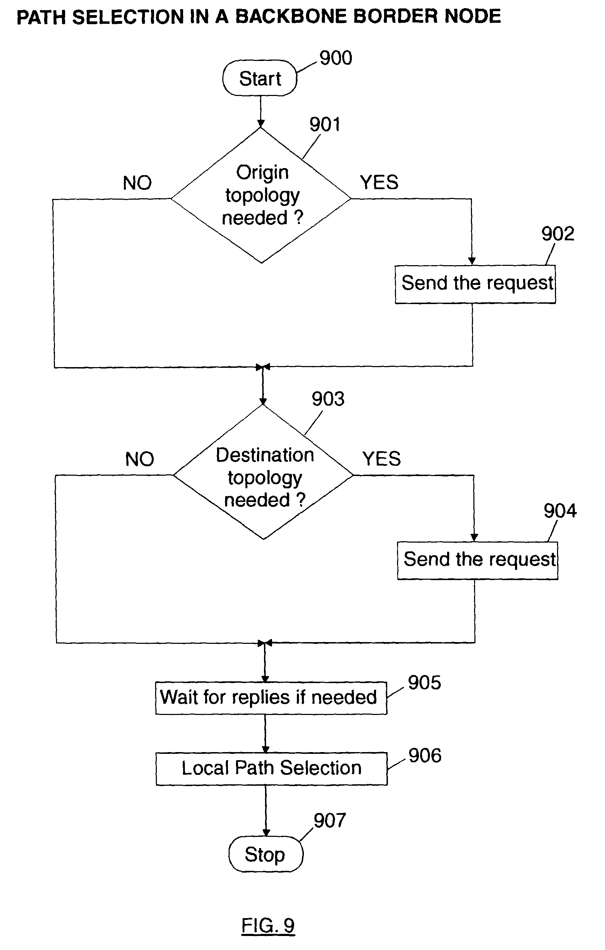

Figure 9 is the flow chart of the path selection in a backbone border node according to the present invention. For clarity purpose, only the normal case is represented (the time out behaviour is omitted). This procedure is called when a path selection request is received from an access subnetwork node and a path from a source node to a destination node must be selected :
- **900.** start of the procedure
- **901.** a test determines whether or not the topology of the access subnetwork in which the source node is located is up-to-date :
   - If the topology is up-to-date, the procedure goes on with step (903)
   - If the topology is not up-to-date, the procedure goes on with step (902)
- **902.** a request for a topology update is sent to the access border node located in the same subnetwork as the source node.
- **903.** a test determines whether or not the topology of the access subnetwork in which the destination node is located is up-to-date :
   - If the topology is up-to-date, the procedure goes on with step (905).
   - If the topology is not up-to-date, the procedure goes on with step (904).
- **904.** a request for a topology update is sent to the access border node located in the same subnetwork as the destination node.
- **905.** the backbone border node waits for the replies corresponding to the topology requests.
- **906.** when all replies have been received, the access subnetwork topologies are updated, and a local path selection is computed. Then, the selected path is returned to the requesting access subnetwork node. The procedure terminates on step (907).

While the invention has been particularly shown and described with reference to a preferred embodiment, it will be understood that various changes in form and detail may be made therein without departing from the spirit, and scope of the invention.

## Claims

1. A method for selecting a path from a source node to a destination node in a packet switching network divided in a backbone subnetwork connected to one or a plurality of access subnetworks, said network comprising a plurality of nodes interconnected with transmission links, said access subnetworks comprising one or a plurality of access border nodes directly connected to the backbone subnetwork, said backbone subnetwork comprising one or a plurality of backbone border nodes directly connected to the access subnetworks, border nodes of different subnetworks being connected by border links, each node having access to a local topology of the subnetwork it belongs to, said method characterized in that it involves if the source node and the destination node are located in different access subnetworks - a source subnetwork and a destination subnetwork -:
in the source node, the steps of:
• checking (701) whether the destination node is located in the source subnetwork or not and whether the source is located in the backbone subnetwork or not.
If the destination node is not located in the source subnetwork and if the source node is not located in the backbone network :
• selecting (701) a backbone border node adjacent to the source subnetwork;
• requesting (701) said backbone border node to select a path from the source node to the destination node;
in the backbone border node adjacent to the source subnetwork, the steps of:
• receiving the request for selecting a path from the source node to the destination node;
• requesting (702) an access border node in the source subnetwork to send back a subset of the local topology of the source network;
• receiving (704) said subset of the local topology of the source network;
• checking (703) whether the destination node is located in the backbone subnetwork or not.
If the destination node is not located in the backbone subnetwork :
• identifying (703) the destination subnetwork;
• selecting (703) an access border node in said destination subnetwork;
• requesting (703) said access border node in the destination subnetwork to send back a subset of the local topology of the destination subnetwork;
• receiving (705) said subset of the local topology of the destination network;
• selecting (706) a path from the source node to the destination node from the information contained in the local topology of the source subnetwork, the backbone subnetwork and destination subnetwork.
• sending back (707) to the source node the selected path.

2. The method according to the preceding claim comprising :
if the source node and the destination node are located in the source subnetwork:
• in the source node, the steps of:
• checking whether the the destination node is located in the source subnetwork or not. If the destination node is located in the source subnetwork :
• selecting a path from the source node to the destination node.
if the source node is located in the backbone subnetwork and the destination is located in an access subnetwork :
• in the source node, the steps of:
• checking (703) whether the destination node is located in the backbone subnetwork or not.
If the destination node is not located in the backbone subnetwork :
• identifying (703) the destination subnetwork;
• selecting an access border node in the destination subnetwork;
• requesting (703) said access border node in the destination subnetwork to send back a subset of the local topology of the destination subnetwork;
• receiving (705) said subset of the local topology of the destination network;
• selecting (706) a path from the source node to the destination node from the information contained in the local topology of the backbone subnetwork and destination subnetwork.
if the source node is located in an access subnetwork and the destination node is located in the backbone network:
• in the source node, the steps of:
• checking whether the destination node is located in the source subnetwork or not and whether the source node is located in the backbone subnetwork.
If the destination node is not located in the source subnetwork and if the source node is not located in the backbone subnetwork:
• selecting (701) a backbone border node adjacent to the source subnetwork;
• requesting (701) said backbone border node to select a path from the source node to the destination node;
• in the backbone border node adjacent to the source subnetwork, the steps of:
• checking whether the destination node is located in the backbone network or not. If the destination node is located in the backbone network :
• receiving the request for the source node for selecting a path from the source node to the destination node;
• requesting (702) an access border node in the source subnetwork to send back a subset of the local topology of the source network;
• receiving (704) said subset of the local topology of the source network;
• selecting (706) a path from the source node to the destination node from the information contained in the local topology of the source subnetwork and the backbone subnetwork.
• sending back (707) to the source node the selected path.

3. A method in a backbone border node for selecting a path from a source node to a destination node in a packet switching network divided in a backbone subnetwork connected to one or a plurality of access subnetworks, said network comprising a plurality of nodes interconnected with transmission links, said access subnetworks comprising one or a plurality of access border nodes directly connected to the backbone subnetwork, said backbone subnetwork comprising one or a plurality of backbone border nodes directly connected to the access subnetworks, border nodes of different subnetworks being connected by border links, each node having access to a local topology of the subnetwork it belongs to, said method characterized in that it involves the steps of:
• receiving a request for selecting a path from the source node to the destination node;
• requesting (702) an access border node in the source subnetwork to send back a subset of the local topology of the source network;
• receiving (704) said subset of the local topology of the source network;
• checking (703) whether the destination node is located in the backbone subnetwork or not.
If the destination is not located in the backbone subnetwork :
• identifying (703) the destination subnetwork;
• selecting (703) an access border node in said destination subnetwork;
• requesting (703) said access border node in the destination subnetwork to send back a subset of the local topology of the destination subnetwork;
• receiving (705) said subset of the local topology of the destination network;
• selecting (706) a path from the source node to the destination node from the information contained in the local topology of the source subnetwork, the backbone subnetwork and destination subnetwork.
• sending back (707) to the source node the selected path.

4. The method according to the preceding claim comprising the steps of :
if the destination node is located in the backbone network :
• selecting (706) a path from the source node to the destination node from the information contained in the local topology of the source subnetwork and the backbone subnetwork.
• sending back (707) to the source node the selected path.

5. A method in a source node for selecting a path a destination node in a packet switching network divided in a backbone subnetwork connected to one or a plurality of access subnetworks, said network comprising a plurality of nodes interconnected with transmission links, said access subnetworks comprising one or a plurality of access border nodes directly connected to the backbone subnetwork, said backbone subnetwork comprising one or a plurality of backbone border nodes directly connected to the access subnetworks, border nodes of different subnetworks being connected by border links, each node having access to a local topology of the subnetwork it belongs to, said method characterized in that it involves the steps of:
• checking (701) whether the destination node is located in the source subnetwork or not and whether the source node is located in the backbone subnetwork or not.
If the destination node is not located in the source subnetwork and the source node is not located in the backbone network :
• selecting (701) a backbone border node adjacent to the source subnetwork;
• requesting (701) said backbone border node to select a path from the source node to the destination node;

6. The method according to the preceding claim comprising the steps of :
if the source node and the destination node are located in the source subnetwork:
• checking (701) whether the the destination node is located in the source subnetwork or not.
If the destination node is located in the source subnetwork :
• selecting a path from the source node to the destination node.
if the source node is located in the backbone subnetwork and the destination is located in an access subnetwork :
• checking (703) whether the destination node is located in the backbone subnetwork or not and whether the source is located in the backbone subnetwork or not. If the destination node is not located in the backbone subnetwork and the source node is located in the backbone node:
• identifying (703) the destination subnetwork;
• selecting an access border node in the destination subnetwork;
• requesting (703) said access border node in the destination subnetwork to send it back a subset of the local topology of the destination subnetwork;
• receiving (705) said subset of the local topology of the destination network;
• selecting (706) a path from the source node to the destination node from the information contained in the local topology of the backbone subnetwork and destination subnetwork.
if the source node is located in an access subnetwork and the destination node is located in the backbone network:
• checking whether the destination node is located in the source subnetwork or not and whether the source node is located in an access subnetwork or not.
If the destination node is not located in the source subnetwork and if the source node is located in an access subnetwork :
• selecting (701) a backbone border node adjacent to the source subnetwork;
• requesting (701) said backbone border node to select a path from the source node to the destination node;

7. The method according to any one of the preceding claims comprising in the backbone border node the further step of:
• storing the local topology of source and destination subnetworks for a further path selection request.

8. The method according to the preceding claim comprising in the backbone border node adjacent to the source subnetwork, the further steps of:
• determining whether a local topology of source subnetwork and/or destination subnetwork has been previously stored;
• determining whether said local topology of source subnetwork and/or destination subnetwork is up-to-date;
• selecting (706) a path from the source node to the destination node from the information contained in the local topology of the source subnetwork and/or the destination subnetwork previously stored without :
• requesting (702) an access border node in the source subnetwork to send back a subset of the local topology of the source network, receiving (704) said subset of the local topology of the source network; and/or
• selecting an access border node in the destination subnetwork, requesting (703) said access border node in the destination subnetwork to send back a subset of the local topology of the destination subnetwork; receiving (705) said subset of the local topology of the destination network.

9. The method according to any one of the preceding claims wherein a node is identified by means of a subnetwork identifier and a node identifier, said node identifier being unique within the subnetwork the node belongs to.

10. The method according to any one of the preceding claims wherein the request for selecting a path sent by the source node to the backbone border node comprises :
• an identification of the source node;
• an identification of the destination node;
• a quality of service.

11. The method according to any one of the preceding claims wherein the local topology of each subnetwork comprises information concerning the subnetwork nodes and subnetwork links and information concerning the adjacent border nodes and border links.

12. The method according to any one of the preceding claims wherein the subset of the local topology requested to the access border nodes corresponds to a quality of service.

13. The method according to any one of the preceding claims wherein said access subnetworks may have direct links in between but an access subnetwork should not be used for transmitting traffic from an access node to another.

14. A system for carrying out a method according to any one of the preceding claims.

15. A packet switching network comprising the system according to the preceding claim.

16. A backbone border node for carrying out the method according to any one of claims 1 to 13.
